# EUROPÄISCHE PATENTSCHRIFT

(11) **EP 2 981 738 B1**
(45) Veröffentlichungstag und Bekanntmachung des Hinweises auf die Patenterteilung: **01.03.2017**
(21) Anmeldenummer: 14715863.8
(22) Anmeldetag: 27.03.2014
(51) Int. Cl.: F16G 13/16

(54) **ÖFFNUNGSHILFE**
OPENING AID
AIDE À L'OUVERTURE D'ÉNERGIE

(30) Priorität: 03.04.2013 DE 202013101421 U
(43) Veröffentlichungstag der Anmeldung: 10.02.2016
(73) Patentinhaber: Igus GmbH, 51147 Köln (DE)
(72) Erfinder: BLASE, Frank, 51429 Bergisch Gladbach (DE); JAEKER, Thilo-Alexander, 53757 St. Augustin (DE); DOMMNIK, Jörg, 51147 Köln (DE)
(74) Vertreter: Lippert Stachow Patentanwälte Rechtsanwälte
(86) Internationale Anmeldenummer: PCT/EP2014/056133
(87) Internationale Veröffentlichungsnummer: WO 2014/161762

(56) Entgegenhaltungen:
- WO-A1-2011/054881

## Beschreibung

Die Erfindung betrifft eine Öffnungshilfe zum Öffnen einer Energieführungskette, die eine Anzahl von Kettengliedern mit jeweils zwei bodenseitig miteinander verbundenen Seitenlaschen umfasst, wobei zumindest einige der Kettenglieder an ihrer Oberseite jeweils einen an einer Seitenlasche verschwenkbar angeordneten Quersteg aufweisen, der an der anderen Seitenlasche festlegbar ist, wobei die Seitenlaschen zu einem Laschenstrang verbunden sind und wobei die Öffnungshilfe zur Führung der Querstege beim Öffnen derselben einen sich in einer Arbeitsrichtung erstreckenden Körper und einen eine Abgleitschräge für die Querstege aufweisenden seitlichen Fortsatz aufweist.

Üblicherweise ist die Energieführungskette zur Führung von Leitungen, wie Schläuche, Kabel oder dergleichen, in einem Innenraum der Energieführungskette ausgebildet, wobei der Innenraum durch Seitenlaschen und Querstege begrenzt wird.

Zum Einbringen oder Auswechseln der Leitungen in den Innenraum der Energieführungskette muss dieselbe geöffnet werden. Dies kann beispielsweise mittels eines Schraubenziehers oder dergleichen erfolgen. Alternativ werden gattungsgemäße Öffnungshilfen eingesetzt. Eine derartige Öffnungshilfe wird üblicherweise in Arbeitsrichtung in den Innenraum so eingeführt und längs der Energiekette durch den Innenraum verfahren, dass sie unter bodenseitiger Gegenlagerung sukzessiv unter die oberen Stege greift, dieselben nach oben aufhebelt und an der Abgleitschräge radial über den Innenraum hinaus nach Außen verschwenkt. Beispielsweise wird in der WO 2011/054881 A1 eine gattungsgemäße Öffnungshilfe offenbart, die einen aus Platten aufgebauten Körper und einen an denselben anmontierten seitlichen Fortsatz aufweist.

Aufgabe der Erfindung ist, eine gattungsgemäße Öffnungshilfe bereitzustellen, das gut handhabbar ist. Ferner soll die Öffnungshilfe einfach aufgebaut und einfach herstellbar sein.

Die gestellte Aufgabe wird erfindungsgemäß durch die Merkmale des Anspruches 1 gelöst. Vorteilhafte Weiterbildungen werden in den Unteransprüchen beschrieben. Die gestellte Aufgabe wird bereits dadurch gelöst, dass das der Fortsatz relativ zu dem Körper bewegbar an demselben anlagert ist und zwischen einer Arbeitsposition, in der sich der Fortsatz für die Querstege führungswirksam seitlich vom Körper erstreckend angeordnet ist, und einer Ruheposition, in der der Fortsatz aus der Arbeitsposition weg bewegt führungsunwirksam angeordnet ist, hin und her bewegbar ist.

Damit kann der Fortsatz allein durch eine Bewegung relativ zu dem Körper und ohne Lösung von demselben in eine Ruheposition hinein gebracht werden, in der er beispielsweise für eine Lagerung vor Ort oder in einem Lager oder für einen Transport weniger raumgreifend und damit störend wie in der Arbeitsposition von dem Körper seitlich absteht. Hierzu müsste beim Stand der Technik der Fortsatz von dem Körper mittels eines Werkzeuges manuell gelöst werden, wodurch die Öffnungshilfe mit Körper und Fortsatz in verlierbare zwei lose Bauteile zerfällt und zum Einsatz umständlich wieder ordnungsgemäß zusammengebaut werden müssen.

Der Fortsatz kann in einer möglichen Form der Relativbewegung von Fortsatz und Körper zueinander linear verschieblich zwischen den Positionen an dem Körper gelagert sein. In einer bevorzugten Ausführungsform der Öffnungshilfe ist der Fortsatz um eine erste Schwenkachse zwischen den Positionen verschwenkbar an dem Körper angelagert. Damit kann die Öffnungshilfe konstruktiv vereinfacht werden.

Ferner kann mit der Verschwenkung zum Körper hin in der Ruheposition eine entsprechend verminderte Außenkontur erzielt werden.

Vorzugsweise ist der Fortsatz in der Ruheposition parallel oder etwa parallel zu einer die Arbeitsrichtung und eine Höhenrichtung aufweisenden Längsebene angeordnet. Die Längsebene kann somit senkrecht zu einer Querrichtung angeordnet sein. In Einsatzlage der Öffnungshilfe kann die Längsebene parallel oder etwa parallel zu den Seitenlaschen angeordnet sein. Die Querstege der Energieführungskette können in Einsatzlage der Öffnungshilfe in Querrichtung weisen. Der Fortsatz kann somit in der Ruhelage platzsparend parallel zum Körper ausgerichtet sein. Er kann in der Ruheposition gering beabstandet zum Körper bis an dem Körper anliegend angeordnet sein.

Platzsparend kann der Fortsatz in der Ruheposition in dem Körper integriert angeordnet sein. Er kann in der Ruheposition in dem Körper angeordnet sein, wobei er vorzugsweise von Innen höchsten an die Außenkontur des Körpers heranragt oder dieselbe um einen vorzugsweise geringen Betrag nach außen hin überragt. In einer bevorzugten Ausführungsform der Öffnungshilfe weist der Körper eine erste Aufnahme auf, in der der Fortsatz in der Ruheposition angeordnet ist. Hierbei ist die Aufnahme so ausgebildet, dass der seitliche Fortsatz in seiner Ruheposition nicht über die Außenkontur des Körpers hinausragt. Damit kann die Öffnungshilfe in der Ruheposition des seitlichen Fortsatzes bezüglich der Querrichtung oder Seitenrichtung minimiert werden.

Die Öffnungshilfe kann manuell oder automatisiert in dem Innenraum der Energieführungskette verfahrbar ausgelegt sein. Hierzu kann die Öffnungshilfe unterseitig am Boden der Energieführungskette und/oder seitlich kraftmechanisch günstig an der Seitenlasche geführt sein, von der die oberen Querstege gelöst werden sollen, um mit Hilfe der Öffnungshilfe an der anderen Seitenlasche insbesondere seitlich über den Innenraum der Energieführungskette verschwenkt zu werden. Zur seitlichen Führung an der Seitenlasche kann die Öffnungshilfe seitlich flächig bevorzugt über vorgesehene Längsrippen anliegen.

Die Stege an der Oberseite können mittels eines als Verriegelungs- oder Verrastungselement ausgelegten Verschlusselementes, wie Riegel oder Rasthaken, an der anderen Seitenlasche befestigbar sein, wobei die anderen Seitenlaschen zu einem Laschenstrang verbunden sind. Anstatt einer Verrastung kann auch eine Steck- und/oder Magnetverbindung vorgesehen sein.

Zum Öffnen mit der Öffnungshilfe können die zu öffnenden Querstege aus ihrer Schließposition an der Lasche zuerst mittels eines geeigneten Werkzeuges, wie Schraubenzieher, in eine Losposition gebracht werden, in der sie lose bleibend an der Lasche anliegen, um dann in einem zweiten Schritt mittels der Öffnungshilfe an der anderen Seitenlasche soweit in eine erste Verschwenkposition verschwenkt zu werden, dass der Innenraum zum Einlegen von Versorgungsleitungen geöffnet ist. Hierbei können die Stege unter Abgleiten an der in Arbeitsrichtung verfahrbaren Öffnungshilfe jeweils seitlich über den Innenraum hinaus in eine zweite Verschwenkposition hinein verschwenkt werden. Die oberen Stege können verfahrenstechnisch günstig mit Verfahren der Öffnungshilfe in dem Innenraum der Energieführungskette aus ihrer Schließposition herausgehebelt und in einem Zug weiter in eine der Schwenkpositionen gebracht werden.

Die erste Aufnahme kann eine beidseitig geöffnete erste Durchgangsöffnung aufweisen, in der der seitliche Fortsatz in der Ruheposition angeordnet ist. Besonders vorteilhaft kann der seitliche Fortsatz aus der ersten Durchgangsöffnung beidseitig aus der Ruheposition heraus seitlich in eine zur Arbeitsrichtung linksseitige bzw. eine in Arbeitsrichtung rechtsseitige Arbeitsposition hinein verschwenkbar sein. Damit kann der seitliche Fortsatz wahlweise aus der Ruheposition in die linksseitige bzw. in eine zur Arbeitsrichtung rechtsseitige Arbeitsposition hinein verschwenkt werden. In der linksseitigen Arbeitsposition kann die Öffnungshilfe die Querstege öffnen, die jeweils in Arbeitsrichtung links an einer Seitenlasche verschwenkbar angeordnet sind und in Arbeitsrichtung rechts jeweils von der anderen Seitenlasche oder lösbar sind.

In Umkehrung können bei einer rechtsseitigen Arbeitsposition des seitlichen Fortsatzes Querstege jeweils in eine Offenposition hinein abgehoben werden, die in Arbeitsrichtung rechts jeweils an einer anderen Seitenlasche verschwenkbar angelenkt sind und in Arbeitsrichtung links jeweils von einer in Arbeitsrichtung linken Seitenlasche gelöst oder lösbar sind. Somit können Querstege, die in Arbeitsrichtung jeweils links an einer Seitenlasche angelenkt und jeweils rechts von einer Seitenlasche oder lösbar sind, mittels des in linksseitiger Arbeitsposition befindlichen seitlichen Fortsatzes in ihre jeweilige Offenposition hinein verschwenkt werden. Befindet sich der seitliche Fortsatz in seiner zur Arbeitsrichtung rechtsseitigen Arbeitsposition, so können mittels der in Arbeitsrichtung in die Energieführungskette eingeführten Öffnungshilfe an in Arbeitsrichtung rechten Seitenlaschen verschwenkbar gehaltenen und in Arbeitsrichtung links von in Arbeitsrichtung linken Seitenlaschen gelösten oder lösbaren Seitenlaschen mit Verfahren der Öffnungshilfe in Arbeitsrichtung in ihre jeweilige Offenposition hinein verschwenkt werden.

Die erste Schwenkachse kann vorteilhaft in der Längsebene angeordnet sein. Damit können die linksseitige Arbeitsposition und die rechtsseitige Arbeitsposition des seitlichen Fortsatzes spiegelsymmetrisch zu der Längsebene angeordnet sein. Ferner kann die erste Schwenkachse in einem Winkel zur Arbeitsrichtung angeordnet sein. Damit kann der seitliche Fortsatz entsprechend schräg zur Arbeitsrichtung zwischen den einzelnen Positionen geschwenkt werden. Die erste Schwenkachse kann sich in einer bevorzugten Ausführungsform der Öffnungshilfe mit einer Erstreckungskomponente gegen Arbeitsrichtung und einer Erstreckungskomponente in Höhenrichtung erstrecken. Damit kann der seitliche Fortsatz aus der Ruheposition mit einer Erstreckungskomponente in Arbeitsrichtung in seine jeweilige Arbeitsposition hinein verschwenkt werden. Der seitliche Fortsatz kann in der jeweiligen Arbeitsposition sich mit einer Richtungskomponente gegen Arbeitsrichtung erstreckend angeordnet sein. Dies heißt, dass der zu verschwenkende Quersteg mit Verfahren der Öffnungshilfe in Arbeitsrichtung bezüglich des seitlichen Fortsatzes zuerst in Arbeitsrichtung hinten nahe der ersten Schwenkachse an dem seitlichen Fortsatz anstößt und mit weiterem Verfahren der Öffnungshilfe in Arbeitsrichtung hinten an dem Fortsatz so abgleitet, dass er bezüglich der Arbeitsrichtung radial nach außen geführt wird.

Vorzugsweise ist der Körper plattenförmig ausgebildet. Damit weist der Körper eine verfahrenstechnisch leicht herstellbare Form auf. Die Öffnungshilfe kann vorteilhaft einfach als Spritzgussteil, insbesondere als Kunststoffspritzgussteil hergestellt sein.

Der Körper kann, ähnlich wie im Stand der Technik, zumindest an einem in Arbeitsrichtung hinterem Endabschnitt sich in Arbeitsrichtung keilförmig verjüngend ausgebildet sein. Hierzu kann er unterseitig eine Gleitfläche zur bodenseitigen Führung in dem Innenraum der Energieführungskette und eine oberseitig vorgesehene Aufgleitschräge für die zu öffnenden Querstege aufweisen. Die Aufgleitschräge kann somit gegen Arbeitsrichtung und in Höhenrichtung verlaufend ausgebildet sein.

Die erste Schwenkachse ist vorteilhaft parallel oder etwa parallel zumindest zu dem Abschnitt der Aufgleitschräge angeordnet, die benachbart zu der Schwenkachse ist. Die Aufgleitschräge kann unterschiedlichen Abschnitten unterschiedliche Winkel zur Arbeitsrichtung aufweisen, wobei jedoch die Aufgleitschräge gegen Arbeitsrichtung schrittweise oder kontinuierlich steiler angestellt ist. Der Fortsatz kann flügelartig ausgebildet sein. Hierzu kann er eine die Abgleitschräge aufweisende in Arbeitsrichtung hintere Seitenfläche bzw. Seitenkante aufweisen.

WO2011/05488 offenbart eine Öffnungshilfe
nach dem Oberbegriff des Anspruchs 1.

Der Fortsatz kann in der Arbeitsposition mittels einer Abstützung gestützt gehalten sein. Diese Abstützung kann vorzugsweise als Schwenkhebel ausgebildet sein. Der Schwenkhebel kann um eine zweite Schwenkachse senkrecht oder etwa senkrecht zu der ersten Schwenkachse zwischen einer Stützposition, in der der Schwenkhebel mit einem freien Ende abstützend an dem Fortsatz angreift, und der Ruheposition, in der der Schwenkhebel zum Körper hin verschwenkt angeordnet ist, verschwenkbar an dem Körper angeordnet sein. Hierbei kann der Schwenkhebel in seiner Stützposition den Fortsatz in seiner Arbeitsposition abstützen. In der Ruheposition des Schwenkhebels kann derselbe, ähnlich wie der seitliche Fortsatz, zu dem Körper hin verschwenkt angeordnet sein. Vorzugsweise weist der Körper eine zweite Aufnahme auf, in der der Schwenkhebel in der Ruheposition angeordnet ist. Die zweite Aufnahme kann eine beidseitig geöffnete zweite Durchgangsöffnung aufweisen, in der der Schwenkhebel in der Ruheposition angeordnet ist. Aus dieser zweiten Durchgangsöffnung kann der Schwenkhebel beidseitig aus der Ruheposition heraus seitlich in eine zu der Arbeitsrichtung linksseitige Arbeitsposition bzw. in eine zu der Arbeitsrichtung rechtsseitige Arbeitsposition hinein verschwenkbar angeordnet sein. Dies entspricht im Wesentlichen den Verschwenkmöglichkeiten des seitlichen Fortsatzes aus dessen ersten Durchgangsöffnung heraus in seine jeweilige linksseitige bzw. rechtsseitige Arbeitsposition hinein.

Die Abstützung kann in der Abstützposition endseitig mit dem Fortsatz vorzugsweise unter Verrastung an denselben verbunden sein.

Die Öffnungshilfe kann mit der Abgleitschräge die Querstege aufhebeln, wozu die Ableitschräge in den in Arbeitsrichtung hinteren Endabschnitt gegen Arbeitsrichtung nach oben geneigt ausgebildet sein kann. Dies kann günstig bei einer zu lösenden Verbindung der Querstege mit der Seitenlasche, wie zum Beispiel bei einer Steckverbindung oder einer Magnetverbindung, sein, deren Lösung geringe Kräfte erfordert. Hierzu kann die Abgleitschräge so an dem Fortsatz zu dem Körper hin geführt angeordnet sein, dass sie dicht am Körper in Arbeitsrichtung verläuft und den Körper vorzugweise überragt. Damit kann die Abgleitschräge dicht am Körper als Aufgleitschräge dienen und das Aufhebeln der oberen Querstege einleiten. Konstruktiv einfacher ist, die Aufgleitschräge als vorzugsweise schmale obere Seitenfläche oder Oberkante vorzusehen. Diese kann reibungsgünstig gerundet ausgebildet sein kann.

Der Körper und der seitliche Fortsatz können in der Ruheposition eine plattenförmige Gesamtkontur aufweisen. Ebenfalls können der Körper und der seitliche Fortsatz in der Ruheposition und zusätzlich die Abstützung in der Ruheposition die plattenförmige Gesamtkontur aufweisen. Damit kann die Öffnungshilfe eine sehr einfache Form aufweisen.

Vorzugsweise ist die Öffnungshilfe einstückig ausgebildet.

Der seitliche Fortsatz und/oder die Abstützung können jeweils über ein Filmgelenk stoffschlüssig mit dem Körper verbunden sein. Somit kann die Öffnungshilfe als sehr einfaches Spritzgussteil ausgebildet sein, indem nach der Fertigung der seitliche Fortsatz und/oder die Abstützung in einer Ebene in der jeweils zugeordneten Durchgangsöffnung angeordnet sind.

Die vorliegende Erfindung wird im Folgenden anhand einer in einer Zeichnung dargestellten Ausführungsform der Öffnungshilfe näher erläutert. In der Zeichnung zeigen:
- **Figur 1**: eine perspektivische Seitenansicht einer Öffnungshilfe in einer bezüglich einer Arbeitsrichtung linksseitigen Arbeitsposition,
- **Figuren 2a-c**: verschiedene Seitenansicht der Öffnungshilfe gemäß Figur 1,
- **Figur 3**: eine perspektivische Seitenansicht der Öffnungshilfe gemäß Figur 1 in Eingriff in eine Energieführungskette in Arbeitsrichtung,
- **Figuren 4a-d**: jeweils eine Ansicht der Öffnungshilfe, jedoch in einer Ruheposition,
- **Figur 5**: eine perspektivische Seitenansicht der Öffnungshilfe, jedoch in einer bezüglich der Arbeitsrichtung rechtsseitigen Arbeitsposition,
- **Figuren 6a-c**: jeweils eine Seitenansicht der Öffnungshilfe gemäß Figur 5 und
- **Figur 7**: eine perspektivische Seitenansicht der Öffnungshilfe gemäß Figur 5 in Eingriff in die Energieführungskette gemäß Figur 3.

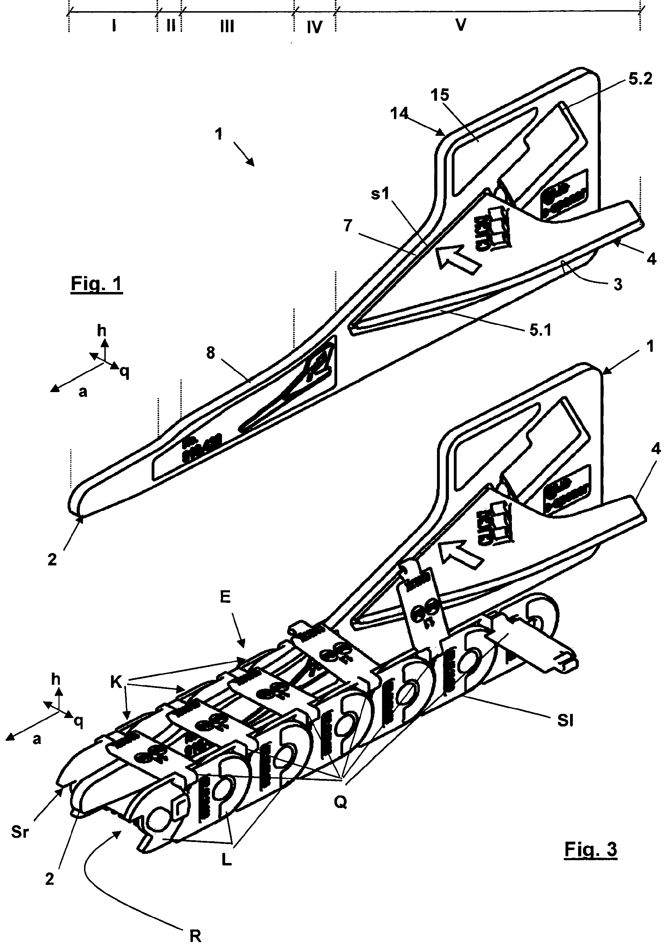

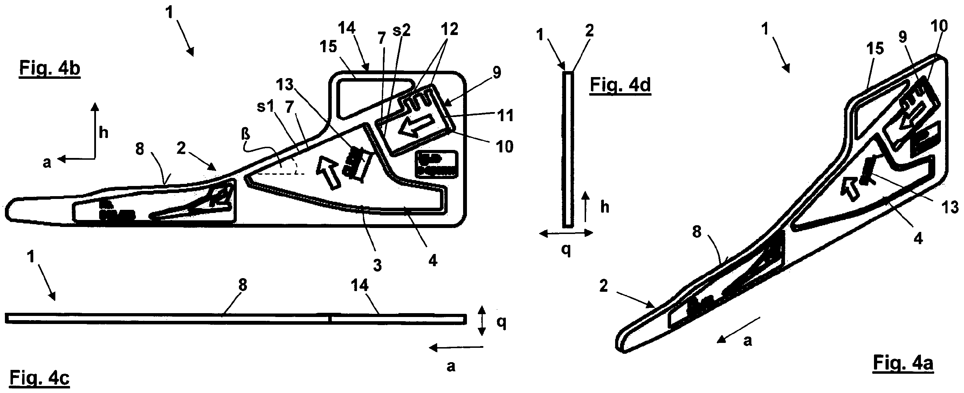

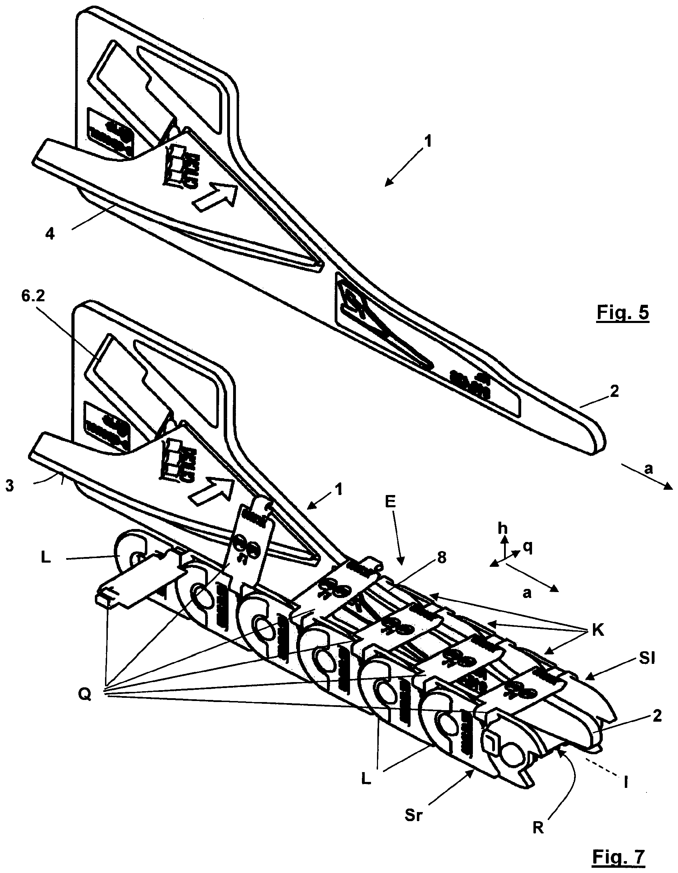

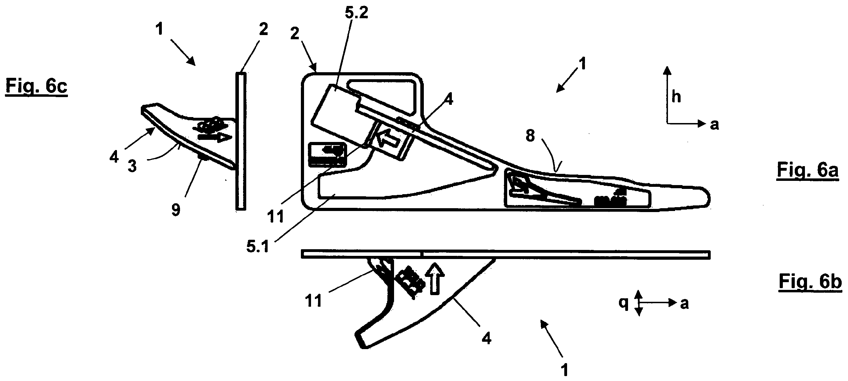

In den Figuren 1 bis 7 ist jeweils eine Öffnungshilfe 1 in verschiedenen Ansichten und Positionen gezeigt, wobei die Öffnungshilfe 1 in den Figuren 3 und 4 in Arbeitsrichtung a öffnend in einen Innenraum R einer Energieführungskette aus Kettengliedern K eingreift, und die Kettenglieder K in Querrichtung q senkrecht zur Arbeitsrichtung a verschwenkbar miteinander verbunden sind. Die Kettenglieder K weisen jeweils zwei bodenseitig miteinander verbundene Seitenlaschen L auf. In der hier gezeigten Ausführungsform der Energieführungskette I ist jedes ihrer Kettenglieder K oberseitig mit einem Quersteg Q verbunden, der zumindest an einer der Seitenlaschen L parallel zu einer Längsachse l bzw. der Arbeitsrichtung a schwenkbar gelagert ist. Die einzelnen Seitenlaschen L sind in der Energieführungskette zu einem bezüglich der in Figuren 3 und 7 gezeigten Arbeitsrichtung a zu einem linken Strang Sl und einem in Arbeitsrichtung a rechten Strang Sr aneinander verschwenkbar verbunden.

Die Öffnungshilfe 1 weist einen sich in Arbeitsrichtung a erstreckenden Körper 2 und eine Abgleitschräge 3 für die Querstege Q aufweisenden seitlichen Fortsatz 4 auf. Der Fortsatz 4 ist relativ zu dem Körper 2 bewegbar an demselben angeordnet. Der Fortsatz 4 ist zwischen einer Arbeitsposition, in der sich der Fortsatz 4 für die Querstege Q führungswirksam seitlich von dem Körper 2 erstreckend angelagert ist (Figuren 1-3, 5-7), und einer Ruheposition, in der der Fortsatz 4 aus der Arbeitsposition wegbewegt ist und führungsunwirksam ist (Figur 4), hin und her bewegbar angelagert. Insbesondere ist der Fortsatz 4 um eine erste Schenkachse s1 zwischen den Positionen verschwenkbar an dem Körper 2 angelagert. Der Fortsatz 4 ist hierbei in der Ruheposition zu dem Körper 2 hin verschwenkt angeordnet.

In der hier gezeigten Ausführungsform der Öffnungshilfe 1 weist der Körper 2 eine erste Aufnahme 5.1 für der Fortsatz 4 auf, wobei der Fortsatz 4 in der Ruheposition in der ersten Aufnahme 5.1 so angeordnet ist, dass er nicht über eine Außenkontur des Körpers 2 hinausragt, hier sogar die Kontur des Körpers 4 mit ausbildet. Das heißt, der Körper 2 und der seitliche Fortsatz 4 weisen in der Ruheposition eine plattenförmige Gesamtkontur auf.

Die erste Aufnahme 5.1 ist hier in Form einer beidseitig geöffneten ersten Durchgangsöffnung 6.1 ausgebildet, in der der seitliche Fortsatz 4 in der Ruheposition angeordnet ist und aus der der seitliche Fortsatz 4 beidseitig aus der Ruheposition heraus seitlich in eine zur Arbeitsrichtung a linksseitige Arbeitsposition (Figur 3) bzw. in eine zur Arbeitsrichtung a rechtsseitige Arbeitsposition (Figur 7) hinein verschwenkbar ist.

Der Körper 2 ist plattenförmig ausgebildet. Die Öffnungshilfe 1 ist einstückig durch Spritzgießen, hier durch Kunststoffspritzgießen hergestellt. Der seitliche Fortsatz 4 ist über ein Foliengelenk 7 stoffschlüssig mit dem Körper 2 verbunden.

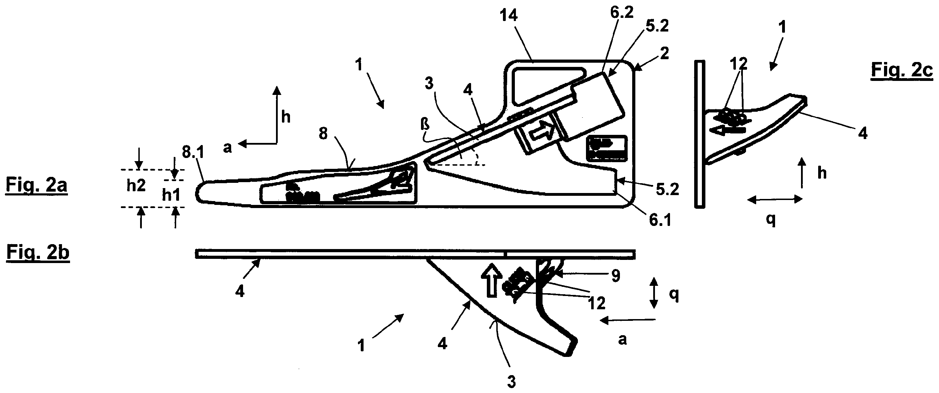

Die erste Schwenkachse s1 liegt in einer Längsebene, die in den Figuren 2a, 4b und 6a gleich der Zeichenebene ist sowie die Arbeitsrichtung a und eine Höhenrichtung h enthält. Sie ist in einem Winkel β zur Arbeitsrichtung a angestellt und erstreckt sich mit einer Erstreckungskomponente gegen Arbeitsrichtung a und eine Erstreckungskomponente in Höhenrichtung h.

Der Körper 2 ist in Arbeitsrichtung a keilförmig zusammenlaufend ausgebildet. Er weist eine sich gegen Arbeitsrichtung a und in Höhenrichtung h verlaufende Aufgleitschräge 8 auf, die in der Arbeitsposition des Fortsatzes 4 bezüglich der Querstege Q führungswirksam gegen Arbeitsrichtung a in die Abgleitschräge 3 des Fortsatzes 4 übergeht.

Gemäß Figur 1 weist die Aufgleitschräge 8 ein Profil auf, das bezüglich seiner Führungswirksamkeit gegenüber den zu öffnenden Querstegen Q in vier Abschnitte I bis IV geteilt ist. Der sich hier gegen Arbeitsrichtung a anschließende Abschnitt V kennzeichnet die Führungswirksamkeit der Abgleitschräge 3 des hier flügelartig ausgebildeten seitlichen Fortsatzes 4 mit dem Verfahren der Öffnungshilfe 1 in Längsrichtung l der Energieführungskette in dem Innenraum R derselben. In Figur 3, in der der flügelartige Fortsatz 4 in seiner zur Arbeitsrichtung a linken Arbeitsposition gezeigt ist, wird die Öffnungshilfe 1 unter seitlicher Anlage an dem hier zur Arbeitsrichtung a rechten Strang Sr geführt, wobei sich die Öffnungshilfe 1 bodenseitig in dem Innenraum R der Energieführungskette E abstützt.

Das Profil der Aufgleitschräge 8 kann zum Öffnen einer bestimmten Energieführungskette E so eingesetzt werden, dass, der erste Abschnitt I mit in Arbeitsrichtung hinteren ersten Höhe h1 (Figur 2a) im Zusammenspiel mit dem gerundeten Ende 8.1 des Körpers 4 lediglich zum sicheren Einführen der Öffnungshilfe 1 in den Innenraum R dient. Der zweite Abschnitt II ist durch einen starken Anstieg der Aufgleitschräge 8 gekennzeichnet, wobei die Aufgleitschräge 8 zu Beginn des dritten Abschnittes III mit einer in Arbeitsrichtung a hinteren zweiten Höhe h2 (Figur 2a) unterseitig an dem hier in Arbeitsrichtung a vorletzten Quersteg Q anliegt. In dem Abschnitt III wird der Quersteg Q von dem hier rechten Strang Sr gelöst, wobei der dritte Abschnitt III eine wesentlich geringere Steigung als der zweite Abschnitt II aufweist, so dass mit dem Verfahren der Öffnungshilfe 1 in Arbeitsrichtung a hier ein größeres Hebelmoment auf den Quersteg Q ausgeübt werden kann. In dem gegen Arbeitsrichtung a nachfolgenden vierten Abschnitt IV ist die Aufgleitschräge 8 wieder steiler angestellt und vermittelt hierdurch eine geringere Hebelkraft als in dem dritten Abschnitt III. In dem vierten Abschnitt IV wird der betreffende Quersteg Q unter Verschwenkung an dem hier linken Strang Sl angehoben.

Alternativ können das Profil mit den unterschiedlich Höhen h1, h2 in dem ersten Abschnitt I beziehungsweise in dem dritten Abschnitt III dazu dienen, Energieführungsketten E mit unterschiedlich hohen Innenräumen R zu öffnen: Bei einer Energieführungskette E mit geringerer Höhe des Innenraumes R können die Querstege Q unter unterseitigem Abgleiten an der Aufgleitschräge 8 im ersten Abschnitt I aufgehebelt und/oder aufgeschwenkt werden, um in den nachfolgenden Abschnitten II-IV unter weiteren Abgleiten weiter verschwenkt zu werden. Bei einer Energieführungskette E mit größerer Höhe des Innenraumes R können die Querstege Q unter unterseitigem Abgleiten an der Aufgleitschräge 8 im dritten Abschnitt III aufgehebelt und/oder aufgeschwenkt, um in dem nachfolgenden Abschnitten IV unter weiteren Abgleiten weiter verschwenkt zu werden.

Bei beiden aufgezeigten Einsatzmöglichkeiten der Öffnungshilfe beginnt die Abgleitschräge 3 im Übergang von dem vierten Abschnitt IV und dem fünften Abschnitt V führungswirksam für die Querstege Q zu werden, indem in dem fünften Abschnitt V die Querstege Q soweit nach außen verschwenkt werden, dass sie, wie in dem in Arbeitsrichtung a vorderen Quersteg Q gezeigt, über ihr Eigengewicht in eine stabile Lage verschwenkt sind, in der sie vollständig nach außen verschwenkt sind.

Gleiches ist in Figur 7 dargestellt, wobei sich der flügelartige Fortsatz 4 hier in einer rechtsseitigen Arbeitsposition befindet und die Öffnungshilfe 1 zu ihrer Führung entsprechend an dem hier linken Seitenstrang Sl anliegt. Entsprechend werden die Querstege Q von dem hier linken Seitenstrang Sl gelöst und an dem hier rechten Seitenstrang Sr verschwenkt. In beiden Fällen greift die Öffnungshilfe 1 maximal im Innenraum R beabstandet zu dem Strang Sr bzw. Sl an, an dem die Querstege Q verschwenkbar gelagert sind, so dass hierüber ein maximales Hebelmoment von der Öffnungshilfe 1 auf die Querstege Q übertragen werden kann.

Der flügelartige Fortsatz 4 ist in den Arbeitspositionen jeweils mittels einer Abstützung 9 gestützt gehalten. Die Abstützung 9 weist einen Schwenkhebel 10 auf, der um eine zweite Schwenkachse s2 senkrecht zu der ersten Schwenkachse s1 zwischen einer Stützposition gemäß den Figuren 1, 2 und 5, in der der Schwenkhebel 10 mit einem freien Ende 11 unterseitig abstützend an dem Fortsatz 4 angreift, und in der Ruheposition, in der der Schwenkhebel 10 zum Körper 2 hin verschwenkt angeordnet ist, verschwenkbar an dem Körper 2 angeordnet ist. Ähnlich wie für den seitlichen Fortsatz 4, weist auch hier der Körper 2 eine zweite Aufnahme 5.2 auf, in der der Schwenkhebel 10 in der Ruheposition so angeordnet ist, dass er nicht über die Außenkontur des Körpers 2 hinausragt, sondern Teil der Kontur wird.

Die zweite Aufnahme 5.2 ist ähnlich wie die erste Aufnahme 5.1 als hier zweite Durchgangsöffnung 6.2 ausgebildet, in der der Schwenkhebel 10 in der Ruheposition angeordnet ist. Damit kann der Schwenkhebel 10 wie der Fortsatz 4 beidseitig aus der Ruheposition seitlich in einer zur Arbeitsrichtung a linkseitige Arbeitsposition bzw. in eine zur Arbeitsrichtung a rechtsseitige Arbeitsposition hinein verschwenkbar sein, so dass der Schwenkhebel 10 den flügelartigen Fortsatz 4 in beiden Arbeitspositionen abstützen kann. Der Schwenkhebel 10 weist an seinem Ende 11 Rastelemente hier in Form von zwei von einander weg weisenden Rasthaken 12 auf, die verrastend in der Stützposition in eine an dem Fortsatz 4 vorgesehene Rastöffnung 13 eingreifen. Damit wird eine stabile Verbindung zwischen dem Schwenkhebel 10 und dem Fortsatz 4 geschaffen. Da die Schwenkachsen s1, s2 senkrecht zueinander stehen, sind der flügelartige Fortsatz 4 und der Rasthaken 12 in den Arbeitspositionen jeweils senkrecht zueinander angeordnet, so dass hierdurch eine optimale Abstützung des Fortsatzes 4 durch den Schwenkhebel 10 erfolgen kann.

Wie der seitliche Fortsatz 4, so ist auch der Schwenkhebel 11 in der Ruheposition in der zweiten Aufnahme 5.2 so angeordnet, dass er nicht über die Außenkontur des Körpers 4 hervorragt und sogar einen Teil der Außenkontur bildet. Der Schwenkhebel 11 ist ebenfalls über ein Foliengelenk 7 stoffschlüssig mit dem Körper 2 verbunden.

Die Öffnungshilfe 1 weist zu ihrer manuellen Führung oberseitig eine Handhabe 14 auf, die durch eine Vertiefung 15 gekennzeichnet ist. Da, wie beispielsweise in Figur 1 und Figur 5 ersichtlich, der Rasthaken 12 in der Arbeitsposition aus der zweiten Durchgangsöffnung 6.2 heraus verschwenkt ist, kann diese zweite Durchgangsöffnung 6.2 zum Durchgriff eines hier nicht dargestellten Fingers eines Benutzers genutzt werden, so dass dann damit die zweite Durchgangsöffnung 6.2 auch Teil der Handhabe 14 wird.

### Öffnungshilfe

### Bezugzeichenliste

- 1: Öffnungshilfe
- 2: Körper
- 3: Abgleitschräge
- 4: Fortsatz
- 5.1: erste Aufnahme
- 5.2: zweite Aufnahme
- 6.1: erste Durchgangsöffnung
- 6.2: zweite Durchgangsöffnung
- 7: Foliengelenk
- 8: Aufgleitschräge
- 8.1: Ende
- 9: Abstützung
- 10: Schwenkhebel
- 11: Ende
- 12: Rasthaken
- 13: Rastöffnung
- 14: Handhabe
- 15: Vertiefung
- I-V: Bereich
- ß: Winkel
- a: Arbeitsrichtung
- l: Längsrichtung
- q: Querrichtung
- h: Höhenrichtung
- h1: erste Höhe
- h2: zweite Höhe
- s1: erste Schwenkachse
- s2: zweite Schwenkachse
- E: Energieführungskette R Innenraum
- K: Kettenglied
- L: Seitenlasche
- Sl: linker Strang
- Sr: rechter Strang
- Q: Quersteg

## Patentansprüche

1. Öffnungshilfe (1) zum Öffnen einer Energieführungskette (E), die eine Anzahl von Kettengliedern(K) mit jeweils zwei bodenseitig miteinander verbundenen Seitenlaschen (L) umfasst, wobei zumindest einige der Kettenglieder (K) an ihrer Oberseite jeweils einen an einer Seitenlasche (L) verschwenkbar angeordneten Quersteg (Q) aufweisen, der an der anderen Seitenlasche (L) festlegbar ist, wobei die Seitenlaschen (L) zu einem Laschenstrang (Sl, Sr) verbunden sind und wobei die Öffnungshilfe (1) zur Führung der Querstege (Q) beim Öffnen derselben einen sich in einer Arbeitsrichtung (a) erstreckenden Körper (2) und einen eine Abgleitschräge (3) für die Querstege (Q) aufweisenden seitlichen Fortsatz (4) aufweist, **dadurch gekennzeichnet, dass** der Fortsatz (4) relativ zu dem Körper (2) bewegbar an demselben angelagert ist und zwischen einer Arbeitsposition, in der sich der Fortsatz (4) für die Querstege (Q) führungswirksam seitlich vom Körper (2) erstreckend anlagert ist, und einer Ruheposition, in der der Fortsatz (4) aus der Arbeitsposition weg bewegt führungsunwirksam angeordnet ist, hin und her bewegbar ist.

2. Öffnungshilfe (1) nach Anspruch 1, **dadurch gekennzeichnet, dass** der Fortsatz (4) um einen erste Schwenkachse (s1) zwischen den Positionen verschwenkbar an dem Körper (2) angelagert ist, wobei der Fortsatz (4) in der Ruheposition zum Körper (4) hin verschwenkt angeordnet ist.

3. Öffnungshilfe (1) nach Anspruch 1 oder 2, **dadurch gekennzeichnet, dass** der Fortsatz (4) in der Ruheposition parallel oder etwa parallel zu einer die Arbeitsrichtung (a) und eine Höhenrichtung (h) aufweisenden Längsebene angeordnet ist.

4. Öffnungshilfe (1) nach einem der Ansprüche 1 bis 3, **dadurch gekennzeichnet, dass** der Körper (2) eine erste Aufnahme (5.1) aufweist, in der der Fortsatz (4) in der Ruheposition angeordnet ist.

5. Öffnungshilfe (1) nach Anspruch 2 und 4, **dadurch gekennzeichnet, dass** die erste Aufnahme (5.1) eine beidseitig geöffnete erste Durchgangsöffnung (6.1) aufweist, in der der seitliche Fortsatz (4) in der Ruheposition angeordnet ist und aus der der seitliche Fortsatz (4) beidseitig aus der Ruheposition heraus seitlich in eine zur Arbeitsrichtung (a) linksseitige Arbeitsposition beziehungsweise in eine zur Arbeitsrichtung (a) rechtsseitige Arbeitsposition hinein verschwenkbar ist.

6. Öffnungshilfe (1) nach einem der Ansprüche 1 bis 5, **dadurch gekennzeichnet, dass** der Körper (2) plattenförmig ausgebildet ist.

7. Öffnungshilfe (1) nach einem der Ansprüche 1 bis 6, **dadurch gekennzeichnet, dass** der Körper (2) eine sich gegen Arbeitsrichtung (a) und in Höhenrichtung (h) verlaufende Aufgleitschräge (18) aufweist, die in der Arbeitsposition des Fortsatzes (4) bezüglich der Querstege (Q) führungswirksam gegen Arbeitsrichtung (a) in die Abgleitschräge (3) des Fortsatzes (4) übergeht.

8. Öffnungshilfe (1) nach einem der Ansprüche 1 bis 7, **dadurch gekennzeichnet, dass** der Fortsatz (4) flügelartig mit einer die Abgleitschräge (3) aufweisenden in Arbeitsrichtung (a) hinteren Seitenfläche bzw. Seitenkante ausgebildet.

9. Öffnungshilfe (1) nach einem der Ansprüche 1 bis 8, **dadurch gekennzeichnet, dass** der Fortsatz (4) in der Arbeitsposition mittels einer Abstützung (9) gestützt gehalten ist.

10. Öffnungshilfe (1) nach Anspruch 9, **dadurch gekennzeichnet, dass** die Abstützung (9) einen Schwenkhebel (10) aufweist, der um eine zweite Schwenkachse (s2) senkrecht oder etwa senkrecht zur ersten Schwenkachse (s1) zwischen einer Stützposition, in der der Schwenkhebel (10) mit einem freien Ende (11) abstützend an dem Fortsatz (4) angreift, und der Ruheposition, in der der Schwenkhebel (10) zum Körper (2) hin verschwenkt angeordnet ist, verschwenkbar an dem Körper (2) angeordnet ist.

11. Öffnungshilfe (1) nach Anspruch 10, **dadurch gekennzeichnet, dass** der Körper (2) eine zweite Aufnahme (5.2) aufweist, in der der Schwenkhebel (10) in der Ruheposition angeordnet ist.

12. Öffnungshilfe (1) nach Anspruch 11, **dadurch gekennzeichnet, dass** die zweite Aufnahme (5.2) eine beidseitig geöffnete zweite Durchgangsöffnung (6.2) aufweist, in der der Schwenkhebel (10) in der Ruheposition angeordnet ist und aus der heraus der Schwenkhebel (10) beidseitig aus der Ruheposition seitlich in eine zur Arbeitsrichtung (a) linksseitige Arbeitsposition beziehungsweise in eine zur Arbeitsrichtung (a) rechtsseitige Arbeitsposition hinein verschwenkbar ist.

13. Öffnungshilfe (1) nach einem der Ansprüche 9 bis 12, **dadurch gekennzeichnet, dass** die Abstützung (9) in der Abstützposition endseitig mit dem Fortsatz (4) vorzugsweise unter Verrastung an demselben verbunden ist.

14. Öffnungshilfe (1) nach einem der Ansprüche 1 bis 13 oder nach einem der Ansprüche 9 bis 13, **dadurch gekennzeichnet, dass** der Körper (2) und der seitliche Fortsatz (4) beziehungsweise der Körper (2), der seitliche Fortsatz (4) und die Abstützung (9) in der Ruheposition eine plattenförmige Gesamtkontur aufweisen.

15. Öffnungshilfe (1) nach einem der Ansprüche 1 bis 14, **dadurch gekennzeichnet, dass** sie einstückig ausgebildet ist.

## Claims

1. An opening aid (1) for opening an energy guide chain (E) which includes a number of chain links (K) each having two side plates (L) connected together at the bottom side, wherein at least some of the chain links (K) at their top side have a respective transverse leg (Q) which is arranged pivotably on a side plate (L) and which can be fixed to the other side plate (L), wherein the side plates (L) are connected to afford a plate line (S1, Sr) and wherein the opening aid (1) for guidance of the transverse legs (Q) upon opening thereof has a body (2) extending in a working direction (a) and a lateral extension (4) having an inclined sliding deflection surface (3) for the transverse legs (Q), **characterised in that** the extension (4) is mounted to the body (2) movably relative thereto and is reciprocatingly movable between a working position in which the extension (4) is arranged extending laterally from the body (2) in operative guiding relationship for the transverse legs (Q) and a rest position in which the extension (4) is arranged in inoperative guiding relationship of being moved away from the working position.

2. An opening aid (1) according to claim 1 **characterised in that** the extension (4) is mounted to the body (2) pivotably about a first pivot axis (s1) between the positions, wherein the extension (4) in the rest position is arranged pivoted towards the body (4).

3. An opening aid (1) according to claim 1 or claim 2 **characterised in that** in the rest position the extension (4) is arranged parallel or approximately parallel to a longitudinal plane having the working direction (a) and a heightwise direction (h).

4. An opening aid (1) according to one of claims 1 to 3 **characterised in that** the body (2) has a first receiving means (5.1) in which the extension (4) is arranged in the rest position.

5. An opening aid (1) according to claim 2 and claim 4 **characterised in that** the first receiving means (5.1) has a first through opening which is opened at both sides and in which the lateral extension (4) is arranged in the rest position and out of which the lateral extension (4) is pivotable on both sides out of the rest position laterally into a working position which is on the left side relative to the working direction (a) or into a working position which is on the right side relative to the working direction (a).

6. An opening aid (1) according to one of claims 1 to 5 **characterised in that** the body (2) is of a plate-shaped configuration.

7. An opening aid (1) according to one of claims 1 to 6 **characterised in that** the body (2) has an inclined sliding-on surface (18) which extends in opposite relationship to the working direction (a) and in the heightwise direction (h) and which in the working position of the extension (4) merges in operative guiding relationship with respect to the transverse legs (Q) in opposite relationship to the working direction (a) into the inclined sliding deflection surface (3) of the extension (4).

8. An opening aid (1) according to one of claims 1 to 7 **characterised in that** the extension (4) is of a wing-like configuration having a side edge or side surface which is at the rear in the working direction (a) and which has the inclined sliding deflection surface (3).

9. An opening aid (1) according to one of claims 1 to 8 **characterised in that** in the working position the extension (4) is held supported by means of a support device (9).

10. An opening aid (1) according to claim 9 **characterised in that** the support device (9) has a pivotal lever (10) which is arranged on the body (2) pivotably about a second pivot axis (s2) perpendicularly or approximately perpendicularly to the first pivot axis (s1) between a support position in which the pivotal lever (10) engages supportingly against the extension (4) with its free end and the rest position in which the pivotal lever (10) is arranged pivoted towards the body (2).

11. An opening aid (1) according to claim 10 **characterised in that** the body (2) has a second receiving means (5.2) in which the pivotal lever (10) is arranged in the rest position.

12. An opening aid (1) according to claim 11 **characterised in that** the second receiving means (5.2) has a second through opening (6.2) which is opened on both sides and in which the pivotal lever (10) is arranged in the rest position and out of which the pivotal lever (10) is pivotable on both sides out of the rest position laterally into a working position which is on the left side relative to the working direction (a) or into a working position which is on the right side relative to the working direction (a).

13. An opening aid (1) according to one of claims 9 to 12 **characterised in that** the support device (9) in the support position is connected at the end to the extension (4), preferably with latching thereto.

14. An opening aid (1) according to one of claims 1 to 13 or according to one of claims 9 to 13 **characterised in that** the body (2) and the lateral extension (4) or the body (2), the lateral extension (4) and the support device (9) are of a plate-shaped overall contour in the rest position.

15. An opening aid (1) according to one of claims 1 to 14 **characterised in that** it is formed in one piece.

## Revendications

1. Aide à l'ouverture (1) pour ouvrir une chaîne d'acheminement d'énergie (E) comprenant un nombre de maillons de chaîne (K) avec deux pattes latérales (L) reliées les unes aux autres côté fond, au moins certains des maillons de chaîne (K) présentant sur leur côté supérieur une traverse (Q) respective disposée de manière pivotante sur la patte latérale (L) et fixable sur l'autre des pattes latérales (L), lesdites pattes latérales (L) étant reliées les unes aux autres pour former un brin de pattes (S1, Sr), et pour guider les traverses (Q) lors de l'ouverture de celles-ci, l'aide à l'ouverture (1) comportant un élément (2) s'étendant dans une direction de travail (a) et un prolongement latéral (4) présentant une partie inclinée de dégagement par glissement (3) pour les traverses (Q), **caractérisée en ce que** le prolongement (4) est monté sur l'élément (2) de manière à pouvoir se déplacer par rapport à celui-ci, et peut effectuer un mouvement de va-et-vient entre une position de travail dans laquelle le prolongement (4) s'étend latéralement à partir de l'élément (2) pour exercer une action de guidage des traverses (Q) et une position de repos dans laquelle le prolongement (4) est éloigné hors de la position de travail et n'exerce plus d'action de guidage.

2. Aide à l'ouverture (1) selon la revendication 1, **caractérisée en ce que** le prolongement (4) est monté sur l'élément (2) de manière pivotante autour d'un premier axe de pivotement entre lesdites positions, ledit prolongement (4) dans la position de repos étant disposé de manière pivotée vers l'élément (4).

3. Aide à l'ouverture (1) selon la revendication 1 ou 2, **caractérisée en ce que** dans la position de repos, ledit prolongement (4) est dispose parallèlement ou approximativement parallèlement à un plan longitudinal incluant la direction de travail (a) et une direction verticale (h).

4. Aide à l'ouverture (1) selon l'une des revendications 1 à 3, **caractérisée en ce que** l'élément (2) comprend un premier logement (5.1) dans lequel le prolongement (4) est disposé dans la position de travail.

5. Aide à l'ouverture (1) selon les revendications 2 et 4, **caractérisée en ce que** le premier logement (5.1) présente une première ouverture de passage (6.1) ouverte sur les deux côtés dans laquelle le prolongement latérale (4) est disposée dans la position de repos et hors de laquelle le prolongement (4) peut être déplacé sur les deux côtés et peut être pivoté latéralement vers une position de travail du côté gauche par rapport à la direction de travail (a) respectivement vers une position de travail du côté droit par rapport à la direction de travail (a).

6. Aide à l'ouverture (1) selon l'une des revendications 1 à 5, **caractérisée en ce que** l'élément (2) est réalisé en forme de plaque.

7. Aide à l'ouverture (1) selon l'une des revendications 1 à 6, **caractérisée en ce que** l'élément (2) comporte une partie inclinée d'engagement par glissement (18) s'étendant contre la direction de travail (a) et dans la direction verticale (h) qui dans la position de travail du prolongement (4) passe dans la partie inclinée de dégagement par glissement (3) du prolongement (4) de manière à exercer une action de guidage par rapport aux traverses (Q).

8. Aide à l'ouverture (1) selon l'une des revendications 1 à 7, **caractérisée en ce que** le prolongement (4) est réalisé en forme d'aile avec une surface latérale ou arête latérale arrière dans le sens de travail comportant ladite partie inclinée de dégagement par glissement (3).

9. Aide à l'ouverture (1) selon l'une des revendications 1 à 8, **caractérisée en ce que** dans la position de travail, le prolongement (4) est retenu de manière supportée par un support (9).

10. Aide à l'ouverture (1) selon la revendication 9, **caractérisée en ce que** le support (9) comporte un levier pivotant (10) qui est disposé de manière pivotante sur l'élément (2) et qui peut être pivoté autour d'un deuxième axe de pivotement (s2) perpendiculairement ou environ perpendiculairement par rapport au premier axe de pivotement (s1) entre une position d'appui dans laquelle le levier pivotant (10) s'engage avec une extrémité libre (11) contre le prolongement (4) en prenant appui sur ce dernier, et une position de repos dans laquelle le levier pivotant (10) est disposé de manière pivotée vers l'élément (2).

11. Aide à l'ouverture (1) selon la revendication 10, **caractérisée en ce que** l'élément (2) comporte un deuxième logement (5.2) dans lequel le levier pivotant (10) est disposé dans la position de repos.

12. Aide à l'ouverture (1) selon la revendication 11, **caractérisée en ce que** le deuxième logement (5.2) présente une deuxième ouverture de passage (6.2) ouverte sur les deux côtés dans laquelle le levier pivotant (10) est disposé dans la position de repos et hors de laquelle le levier pivotant (10) peut être déplacé sur les deux côtés et peut être pivoté latéralement vers une position de travail du côté gauche par rapport à la direction de travail (a) respectivement vers une position de travail du côté droit par rapport à la direction de travail (a).

13. Aide à l'ouverture (1) selon l'une des revendications 9 à 12, **caractérisée en ce que** dans la position d'appui, le support (9) est relié sur son extrémité au prolongement (4), de préférence par encliquetage sur celui-ci.

14. Aide à l'ouverture (1) selon l'une des revendications 1 à 13 ou selon l'une des revendications 9 à 13, **caractérisée en ce que** dans la position de repos, l'élément (2) et le prolongement latéral (4) respectivement l'élément (2), le prolongement latéral (4) et le support (9) présentent un contour total en forme de plaque.

15. Aide à l'ouverture (1) selon l'une des revendications 1 à 14, **caractérisée en ce que** la même est réalisée en une seule pièce.
